# EUROPEAN PATENT APPLICATION

(11) **EP 3 379 502 A2**
(43) Date of publication of application: **26.09.2018**
(21) Application number: 18163212.6
(22) Date of filing: 22.03.2018
(51) Int. Cl.: G07D 11/00, G07C 9/00

(54) **PAPER SHEET PROCESSING SYSTEM, PAPER SHEET PROCESSING APPARATUS, AND PAPER SHEET PROCESSING METHOD**

(30) Priority: 22.03.2017 JP 2017055785
(71) Applicant: KABUSHIKI KAISHA TOSHIBA, Minato-ku Tokyo 105-8001 (JP); Toshiba Infrastructure Systems & Solutions Corporation, Kawasaki-shi, Kanagawa 212-0013 (JP)
(72) Inventor: MIHARA, Shinya, Minato-ku, Tokyo 105-8001 (JP)
(74) Representative: Horn Kleimann Waitzhofer Patentanwälte PartG mbB

(57) **Abstract**

A paper sheet processing system includes a paper sheet processing apparatus (100), and an imaging section (200a, 200b). The paper sheet processing apparatus includes a positional information acquisition section (302) configured to acquire positional information concerning an operator on the basis of image information from the imaging section, a log information acquisition section (303), an output control section (304), and a display section (103). The output control section outputs a processing result in a predetermined period, outputs the positional information and the processing result, and displays the positional information of the operator on the display section together with an image indicating the position of the paper sheet processing apparatus.

## Description

### FIELD

Embodiments described herein relate generally to a paper sheet processing system, paper sheet processing apparatus, and paper sheet processing method.

### BACKGROUND

A paper sheet processing apparatus configured to inspect a large number of loaded bills or the like, and sort the bills according to the types of bills to thereby accumulate the sorted bills is known. Normally, a paper sheet processing apparatus is installed in an area in which an entrance and exit of persons are limited, and can be operated by specific operators. Concomitantly with the operation of such a paper sheet processing apparatus, various recording information items such as an operation record of the operator, operating log of the paper sheet processing apparatus, visual record and the like acquired by a monitoring camera are obtained. However, these recording information items are independent of each other, and hence there has sometimes been a case where analysis or the like of these information items for improvement in the operation cannot efficiently be carried out.

### BRIEF DESCRIPTION OF THE DRAWINGS

FIG. 1 is a perspective view showing an example of a paper sheet processing apparatus in a paper sheet processing system according to a first embodiment.
FIG. 2 is a cross-sectional view of the paper sheet processing apparatus schematically showing the internal structure.
FIG. 3 is a view showing the schematic configuration of the whole paper sheet processing system according to the first embodiment.
FIG. 4 is a block diagram showing a configuration example of the paper sheet processing apparatus.
FIG. 5 is a view showing an example of a positional information table in which positional information concerning the operator correlated with the time of day is recorded.
FIG. 6 is a view showing a first log information operation record table in which relationships between the times of day, operation records, and operators are recorded.
FIG. 7 is a view showing a second log information table of the embodiment in which relationships between the times of day and operation records are recorded.
FIG. 8 is a view showing an example of a processing result of the embodiment.
FIG. 9 is a view schematically showing an example of the output of the paper sheet processing apparatus.
FIG. 10 is a view schematically showing another example of the output of the paper sheet processing apparatus.
FIG. 11 is a flowchart showing an example of processing in the paper sheet processing apparatus.
FIG. 12 is a view schematically showing the whole paper sheet processing system according to a second embodiment.
FIG. 13 is a block diagram showing a configuration example of the paper sheet processing system according to the second embodiment.
FIG. 14 is a view showing an authentication field (table) used for face authentication.
FIG. 15 is a flowchart showing an example of processing of the paper sheet processing system.
FIG. 16 is a flowchart showing an example of processing of the paper sheet processing system.

### DETAILED DESCRIPTION

Various embodiments will be described hereinafter with reference to the accompanying drawings.

In general, according to one embodiment, a paper sheet processing system comprises a paper sheet processing apparatus; and an imaging section configured to image predetermined positions of the paper sheet processing apparatus. The paper sheet processing apparatus comprises a positional information acquisition section configured to acquire positional information concerning an operator carrying out a predetermined operation with respect to the paper sheet processing apparatus on the basis of image information acquired from the imaging section, a log information acquisition section configured to acquire an operation record of the operator concerning the paper sheet processing apparatus or an operating log of the paper sheet processing apparatus as log information, an output control section configured to output the positional information and the log information in correlation with each other, and a display section configured to display information output from the output control section. The output control section outputs a processing result of the paper sheet processing apparatus in a predetermined period, outputs the positional information and the processing result in correlation with each other, and displays the positional information correlated with the time of day of the operator on the display section together with an image indicating the position of the paper sheet processing apparatus.

The disclosure is merely an example, and proper changes within the spirit of the invention, which are easily conceivable by a skilled person, are included in the scope of the invention as a matter of course. In addition, in some cases, in order to make the description clearer, the size, shapes, etc., of the respective parts are schematically illustrated in the drawings, compared to the actual modes. However, the schematic illustration is merely an example, and adds no restrictions to the interpretation of the invention. Besides, in the specification and drawings, the same elements as those described in connection with preceding drawings are denoted by like reference numerals, and a detailed description thereof is omitted unless otherwise necessary.

### (First Embodiment)

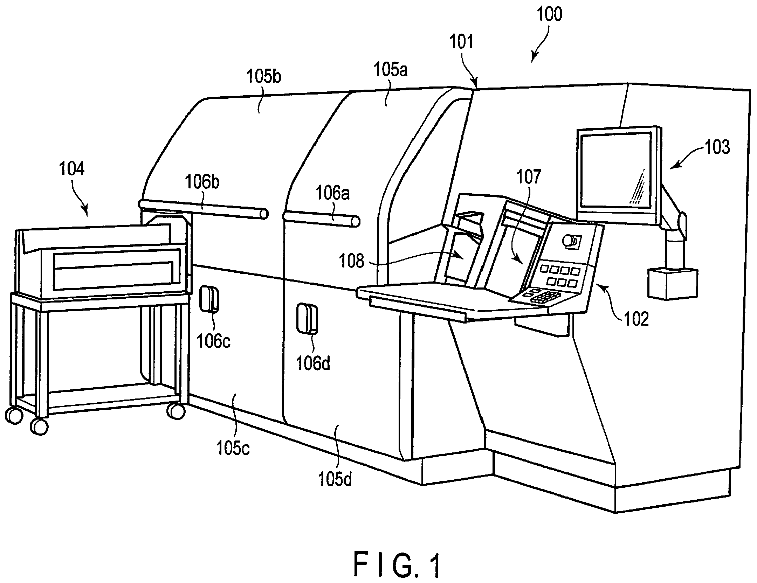

FIG. 1 is a perspective view showing an example of a paper sheet processing apparatus in a paper sheet processing system according to a first embodiment. As shown in FIG. 1, a paper sheet processing apparatus 100 is provided with a main body 101, operating section 102, display section 103, and ejecting section 104. The front side of the paper sheet processing apparatus 100 is covered with a plurality of openable/closable covers 105a, 105b, 105c, and 105d (collectively called a cover 105 in some cases). The covers 105a through 105d are respectively provided with handgrips 106a, 106b, 106c, and 106d used to open them. When the cover 105 is opened, the internal mechanism part of the paper sheet processing apparatus 100 is exposed. On the front side of the paper sheet processing apparatus 100, a loading port 107 through which paper sheets (for example, bills) are loaded, and discharging port 108 through which predetermined paper sheets such as rejected bills are ejected. To the ejecting section 104, bundles of paper sheets bound by the paper sheet processing apparatus 100 are ejected.

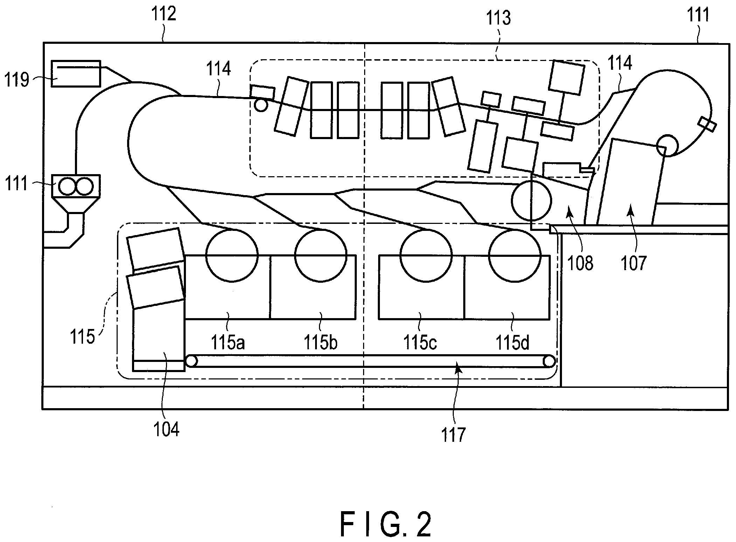

FIG. 2 is a cross-sectional view schematically showing the internal structure of the paper sheet processing apparatus 100. As shown in FIG. 2, the paper sheet processing apparatus 100 is provided with a first unit 111 and second unit 112. The first unit 111 and second unit 112 are mechanically and electrically connected to each other. The paper sheet processing apparatus 100 includes a plurality of conveyance pathways 116 extending through the first unit 111 and second unit 112. The paper sheet processing apparatus 100 includes an inspection section (inspecting device) 113 provided along the conveyance pathway 116, a plurality of binding sections 115a, 115b, 115c, and 115d configured to accumulate and bind the paper sheets for each type of bill, conveyance mechanism (conveying belt) 117 provided beneath the binding sections 115a through 115d and configured to convey the paper sheet bundles bound by the binding sections to the ejecting section 104, cutting section 111 configured to cut rejected paper sheets (bills), and batch card ejecting section 119 configured to collect batch cards. It should be noted that a batch card is a card to be loaded into the device together with a paper sheet bundle, and is a card to which a barcode, QR code or the like indicating information concerning the paper sheet bundle is attached.

When a bundle of a plurality of paper sheets and a batch card to which information concerning the paper sheet bundle is attached are loaded into the loading port 107, the paper sheet processing apparatus 100 takes in the loaded paper sheets one by one, conveys the paper sheets through the conveyance pathways 116, and further inspects the paper sheets by means of the inspection section 113 while conveying the paper sheets. The inspection section 113 determines the types of the paper sheets (bills P), and carries out normal/damaged bill detection and genuine/counterfeit bill detection of the bills P. Bills regarding which results of genuine/counterfeit bill detection are counterfeit bills and bills and the like conveyance states of which deviate from the standard attitude are collected as rejected bills, and are discharged to the rejected bill discharging port 108.

Bills determined as genuine bills by the inspection section 113 are respectively sent to the corresponding binding sections 115a through 115d, and are bound by the binding sections as groups of a predetermined number of sheets. The bound bundles of bills are conveyed by the conveyance mechanism 117 to the ejecting section 104. Further, bills P determined as damaged bills according to the results of the normal/damaged bill detection carried out by the inspection section 113 are sent to the cutting section 111 to be cut by the cutting section 111, and are thereafter discharged to the outside of the device. Paper sheets determined as batch cards by the inspection section 113, i.e., batch cards are sent to the batch card ejecting section 119 through the conveyance pathways 116.

The inspection section 113 may include, in addition to an optical sensor and magnetic sensor configured to carry out determination of the type of bill, and normal/damaged bill detection, a camera, physical property detecting means for detecting the physical property, and magnetic detecting means.

It should be noted that in this embodiment, detection of the type of bill implies processing of detecting which of the types of bills (1,000-yen bill, 5,000-yen bill, and 10,000-yen bill) is the type of a bill on the basis of a pattern printed on the bill. Genuine/counterfeit bill detection implies processing of determining whether a bill is a genuine bill or a counterfeit bill on the basis of reflected light from the hologram of the bill or transmitted light from the watermark of the bill. Normal/damaged bill detection implies processing of determining whether or not the degree of damage of a bill is higher than the criterion value on the basis of an image obtained by shooting the bill to thereby determine whether the bill is a normal bill or a damaged bill. It should be noted that a normal bill implies a bill the degree of damage of which is lower than the criterion value, and which can be put into recirculation, and damaged bill implies a bill the degree of damage of which is higher than the criterion value, and which cannot be put into recirculation.

Further, rejected bills include a bill determined as a counterfeit bill, bill in which buckling or a break is found, bill regarding which it has been determined that it is not possible to determine whether or not the bill is genuine because of skew or two-sheet capture, batch card, and the like. Skew implies a state where a bill P is diagonal with respect to the conveying direction (i.e., a state where bill P is being conveyed in a wrong attitude).

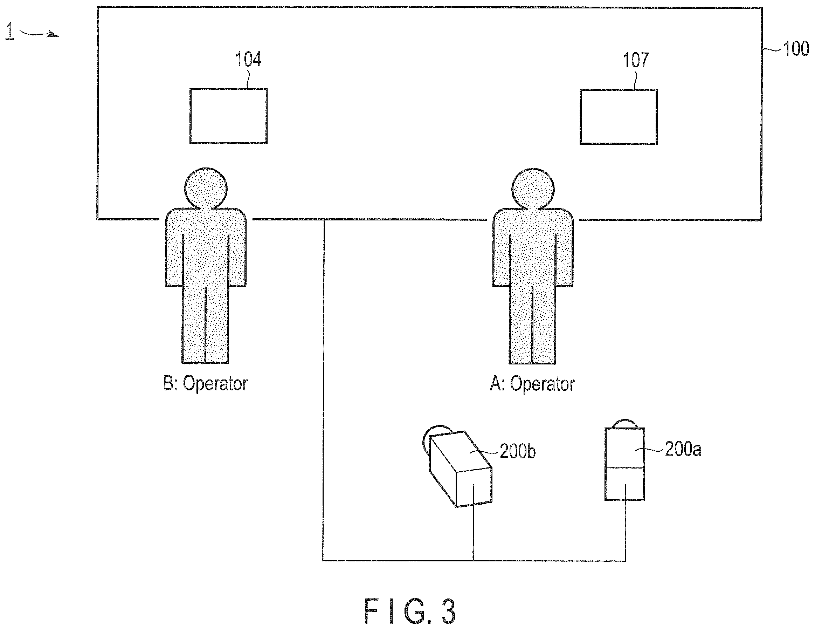

Next, a configuration example of the whole paper sheet processing system according to the first embodiment will be described below. FIG. 3 is a view schematically showing an example of the paper sheet processing system 1. As shown in FIG. 3, the paper sheet processing system 1 is provided with the paper sheet processing apparatus 100, and a plurality of imaging devices (for example, cameras) 200a and 200b (collectively called an imaging device 200 in some cases). In FIG. 3, of all the configurations of the paper sheet processing apparatus 100, the paper sheet ejecting section 104 and loading port 107 are shown. The paper sheet processing apparatus 100 and imaging devices 200a and 200b are connected to each other in such a manner as to be able to communicate with each other by wire or over the wireless. Besides, the paper sheet processing apparatus 100 and imaging devices 200a and 200b may be connected to a personal computer (PC) for recording, host computer and the like.

The imaging devices 200a and 200b are installed around the paper sheet processing apparatus 100, and image predetermined positions of the paper sheet processing apparatus 100. Further, the imaging devices 200a and 200b shoot images used to monitor the work contents and the like of the operators (workers) A and B carrying out operations of the paper sheet processing apparatus 100 at predetermined positions. In one example, the imaging device 200a shoots an image of a position in the vicinity of the loading port 107 and, the operator A working in the vicinity of the loading port 107 is included in the shot image. The imaging device 200b shoots an image of a position in the vicinity of the paper sheet ejecting section 104, and the operator B working in the vicinity of the paper sheet ejecting section 104 is included in the shot image. Each of the imaging devices 200a and 200b transmits the shot image to the paper sheet processing apparatus 100. Here, the image may be a video picture including a plurality of images. Transmission of the image may be made on a real-time basis or images of a predetermined period may collectively be transmitted. Further, the imaging device 200 may transmit information (shooting time, shooting direction, field angle and the like) concerning the ID and imaging of the imaging device to the paper sheet processing apparatus 100 as information incidental to the image. Further, each of the imaging devices 200a and 200b may be provided with a distance sensor or the like, and may transmit the information or the like concerning the detected distance between itself and the object of shooting to the paper sheet processing apparatus 100 as information incidental to the image.

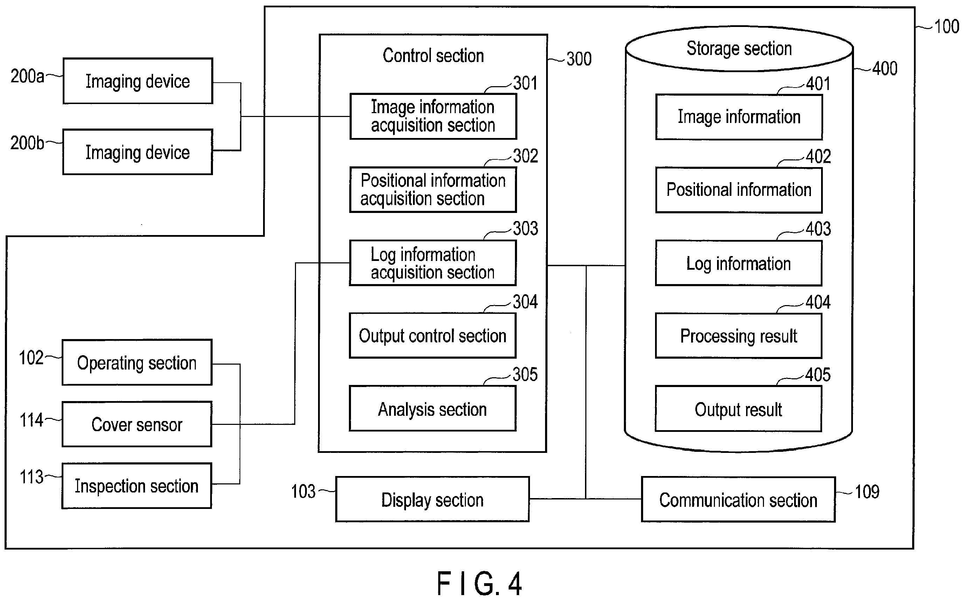

Next, the functional configuration of the paper sheet processing system will be described below. FIG. 4 is a block diagram showing an example of the functional configuration of the paper sheet processing system 1.

As shown in FIG. 4, the paper sheet processing apparatus 100 is provided with, for example, an operating section 102, display section 103, inspection section 113, cover sensor 114, communication section 109, control section 300, and storage section 400. The operating section 102 includes input means such as a keyboard, touch panel, and the like, and accepts an operation of the operator. The operating section 102 may accept an input from an external device (for example, a host computer) through the communication section 109. The display section 103 is constituted of a display panel, and displays various information items concerning the paper sheet processing apparatus 100 on the basis of the control of an output control section 304. The cover sensor 114 detects that the cover 105 has been opened. The communication section 109 is provided with a communication interface configured to carry out communication with devices through a wired or wireless network, and communicates with external devices on the basis of the control of the control section 300. The operation and function of the inspection section 113 are as described previously.

The control section 300 controls various functions of the paper sheet processing apparatus 100. Part of or all of functions possessed by the control section 300 are realized by, for example, a processor such as a Central Processing Unit (CPU) or the like included in the control section 300 by executing various programs stored in the storage section 400. The programs may be downloaded from, for example, an external server through the network NW or the programs stored in a portable storage medium such as an SD card or the like may be installed in the device. Further, part of or all of the aforementioned functions may be realized by hardware such as a Large Scale Integration (LSI), Application Specific Integrated Circuit (ASIC), Field-Programmable Gate Array (FPGA), and the like or may be realized by cooperation between software and hardware.

The control section 300 is provided with, for example, an image information acquisition section 301, positional information acquisition section 302, log information acquisition section 303, output control section 304, and analysis section 305. The image information acquisition section 301 acquires image information from the imaging devices 200a and 200b through the communication section 109. The image information includes a shot image and information incidental to the image. The image information acquisition section 301 stores the acquired image in the storage section 400 as image information 401.

The positional information acquisition section 302 acquires positional information of the operator on the basis of the image information 401. The positional information acquisition section 302 analyzes the shot image to thereby extract a person included in the image and recognize the operator by a facial recognition technique or the like. Recognition of the operator may be carried out according to a position or the like of the operator at the time of input of the ID. The positional information acquisition section 302 extracts a predetermined part of the body of the operator to thereby acquire time-series positional information of the predetermined part. The positional information includes the three-dimensional x-coordinate, y-coordinate, and z-coordinate. Further, the positional information may include a direction of movement from a reference position of the predetermined part and speed in a predetermined direction. Acquisition of positional information may be carried out by using an existing image analysis technique or may be carried out by using information concerning distances between the imaging devices 200a and 200b and objects of shooting, the information having been transmitted from the imaging devices 200a and 200b as information incidental to images. It should be noted that the positional information acquisition section 302 may acquire positional information calculated by the imaging devices 200a and 200b from the imaging devices. Each of the imaging devices 200a and 200b causes the storage section 400 to store therein the acquired information as positional information 402. A specific example of the positional information 402 will be described later.

The log information acquisition section 303 acquires log information concerning the paper sheet processing apparatus 100. The log information includes a record of an operation of the paper sheet processing apparatus 100, the operation being based on an input from the operating section 102, and operating log of the paper sheet processing apparatus 100. The operation record includes information concerning input of the ID carried out by the operator, and rotation or the like of operators. The operating log includes, in addition to opening/closing information concerning the cover 105 input from the cover sensor 114, and determination results of bills P input from the inspection section 113, information concerning turning on/off of the power, ejection of bundles, and occurrence or the like of a jam, the information being acquired by the control section 300. The log information acquisition section 303 causes the storage section 400 to store therein the acquired information as log information 403. A specific example of the log information 403 will be described later.

The output control section 304 outputs the positional information 402 and log information 403 in correlation with each other. More specifically, the output control section 304 correlates the positional information 402 and log information 403 with each other on the basis of time-of-day information included in each of the positional information and log information. Besides, the positional information 402 and log information 403 may also be correlated with each other according to the IDs of the operators. The output control section 304 creates a pseudo-layout indicating a position of the paper sheet processing apparatus 100 on the display of the display section 103, and displays positional information concerning the user correlated with the time of day in a superposing manner. For example, the output control section 304 displays a locus of movement of the operator on a line on the layout. Further, the output control section 304 displays a speed or direction of movement of a predetermined part (for example, a hand or foot) of the body of the operator in correlation with the log information 403.

The output control section 304 totalizes the processing results of the paper sheet processing apparatus 100 in a predetermined period, and causes the storage section 400 to store therein the totalized value as the processing result 404. The processing result 404 includes information items such as a throughput of each operator, jam rate, Mean Time To Failure (MTTF), normal/damaged bill ratio, counterfeit bill number, quantity of output, detected events (errors), and the like. A specific example of the processing result will be described later. The output control section 304 outputs the positional information 402 and processing result 404 in correlation with each other. A specific example of the output of the output control section 304 will be described later. The output control section 304 causes the storage section 400 to store therein the result of output as an output result 405. It should be noted that the output control section 304 may display the output result 405 on a device (for example, an external device or the like connected to the device 100 through the communication section 109) other than the display section 103.

The analysis section 305 subjects the output result 405 to predetermined statistical processing to thereby carry out various types of analyses. The analysis section 305 carries out various types of statistical analyses such as correlation analysis, multiple regression analysis, principal component analysis, multivariable analysis, and like with respect to items included in the output result 405. For example, the analysis section 305 carries out analysis of a (casual) correlation between the movement pathway of the operator and quantity of output, and correlation (casual correlation) between the motions (speeds, directions, and the like) of the hand of the operator in the vicinity of the loading port 107 and various errors (skew, stain, and the like). Further, the analysis section 305 may improve the accuracy of analysis by using machine learning. The analysis carried out by the analysis section 305 can be executed at any time on the basis of an input from the operating section 102 or external device, and analysis may be carried out periodically as batch processing. Further, analysis may be carried out at predetermined opportunities (occurrence of a predetermined number of errors, and the like).

The storage section 400 is constituted of, for example, a Hard Disk Drive (HDD), flash memory, Electrically Erasable Programmable Read Only Memory (EEPROM), Read Only Memory (ROM) or Random Access Memory (RAM), and the like. The storage section 400 stores therein various information items concerning the paper sheet processing apparatus 100, and programs. The various information items imply the aforementioned image information 401, positional information 402, log information 403, processing result 404, output result 405, and the like.

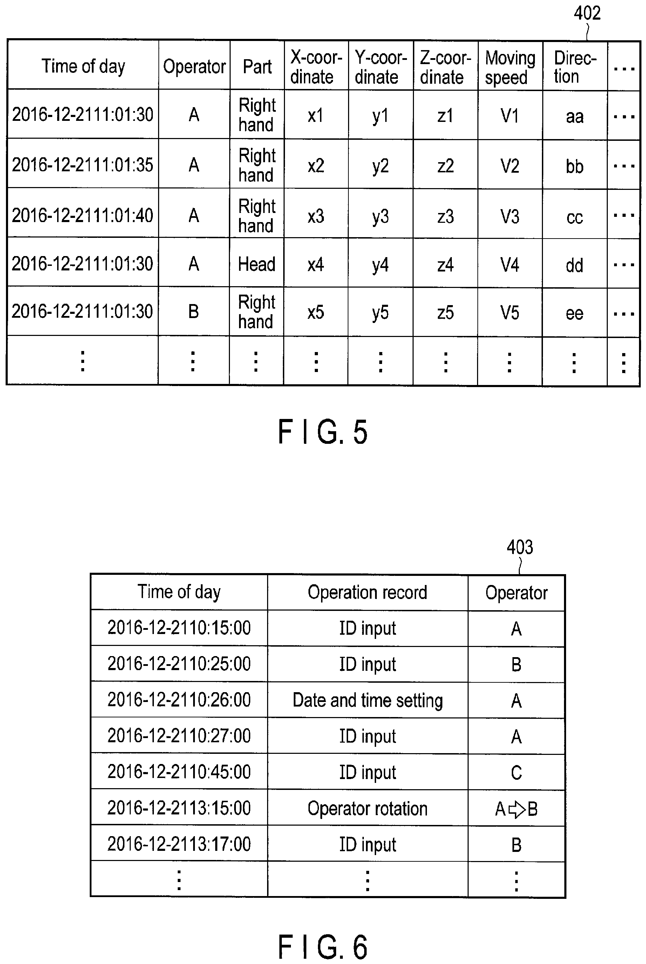

Next, an example of the positional information 402 according to the embodiment will be described below. FIG. 5 is a view showing an example of the positional information 402. The positional information 402 includes the operators A and B, part, x-, y-, and z-coordinates of the part, moving speed of the part, and moving direction of the part all of which are correlated with the time-of-day information. In the example shown in FIG. 5, the positional information 402 includes a field indicating the ID of the operator, part of the body of the operator, time of day, x-coordinate, y-coordinate, z-coordinate, moving speed, and moving direction (angle). For example, in the record of the first row, it is shown that the right hand of the operator A existed at a position of an x1 coordinate, y1 coordinate, and z1 coordinate at 11:01:30 on December 21, 2016, the moving speed at that time was v1, and moving direction was aa.

FIG. 6 is a view showing an example of the log information 403. As shown in FIG. 6, in the log information 403, the operation record and operator are correlated with the time-of-day information. In the example shown in FIG. 6, the log information 403 is a record of the operation carried out by the operator with respect to the paper sheet processing apparatus 100, and includes a field of the time of day, operation record (operation contents), and operator. For example, that the operator A input the ID at 10:15 on December 21, 2016, and that the operator A carried out date and time setting at 10:26 on December 21, 2016, and the like are shown.

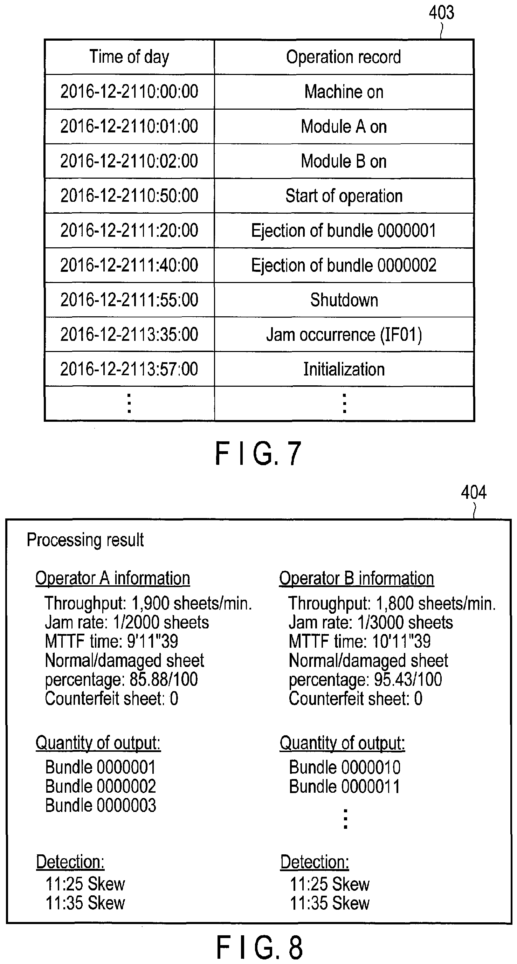

FIG. 7 is a view showing another example of the log information 403. As shown in FIG. 7, the log information 403 includes an operating log correlated with the time-of-day information. For example, the log information 403 is an operating log of the paper sheet processing apparatus 100, and includes a field of the time of day, and operating log (contents of action). The operating log (contents of operation) includes the on/off-states of the paper sheet processing apparatus 100 and the modules, start of operation, ejection of paper-sheet bundles, occurrence of a jam, initialization processing, and the like. In the example shown in FIG. 7, that the power of the paper sheet processing apparatus 100 was turned on at 10:00 on December 21, 2016, and the bundle 0000001 was ejected at 11:20 on December 21, 2016, and the like are represented.

FIG. 8 is a view showing an example of the processing result 404. As shown in FIG. 8, in the processing result 404, for example, a totalized result of the throughput, jam rate, and the like, information concerning the quantities of output, and information concerning the detected events (errors) are gathered together for each of the operators A and B. For example, it is shown that regarding the operator A, the throughput was 1900 sheets/min., jam rate was 1/2000, MTTF was 9 hours, 11 minutes, and 39 seconds, normal/damaged sheet percentage was 85.88%, and counterfeit sheet number was 0. Further, that regarding the operator A, bundles 0000001 to 0000003 were output (ejected), and a skew occurred at 11:25 and 11:35 is shown.

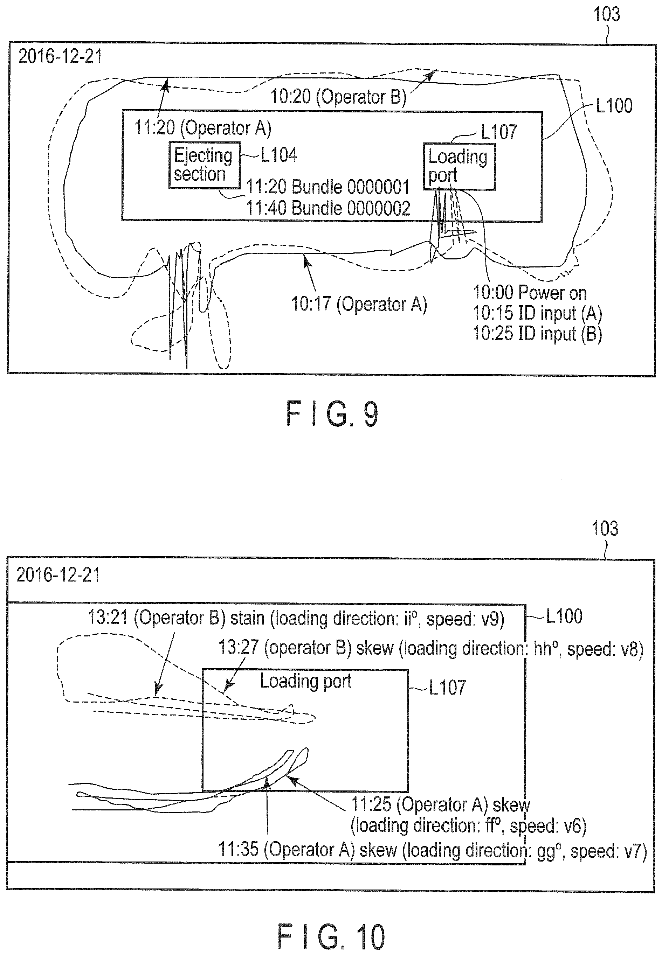

FIG. 9 is a view showing an example of a case where the processing of the paper sheet processing apparatus 100, positions of the operators, and operation record or operating log are correlated with each other to thereby be displayed as the output of the paper sheet processing apparatus 100 to be displayed on the display section 103. As shown in FIG. 9, an object L100 indicating the position of the paper sheet processing apparatus 100 is displayed on the display section 103 of the paper sheet processing apparatus 100. In this example, an object L104 indicating the position of the ejecting section 104 and object indicating the position of the loading port 107 are also displayed. Besides, objects of the sections of the paper sheet processing apparatus 100 and objects inside the room such as the desk, chair, and the like may also be displayed. It should be noted that each object is an image indicating the position of the corresponding device, and may be a schematic image of the device or may be an actually shot image.

Further, a large number of dots indicating the time-series positions of the operator are displayed on the display section 103 on the basis of the positional information 402 of the operator. Loci constituted of linear and curved lines along which the operator moved are displayed as an aggregate of the dots. The loci are displayed in different colors and different patterns so that the loci of the operators A and B can be distinguished from each other. In this example, a solid line around the device object L100 represents the movement locus of the operator A, and broken line represents the movement locus of the operator B. On each movement locus, positions of the operator A or B at specific times of day are displayed as representative points. In this example, the positions at which the operator A existed at 10:17 and 11:20 are indicated by arrows. The time of day of the representative point may periodically be extracted or may be specified by an input from the operating section 102 or may be determined in correlation with an occurrence of a predetermined event (error or the like) in the paper sheet processing apparatus 100.

As described above, the movement loci of the operators A and B are displayed together with the object L100 indicating the position of the paper sheet processing apparatus 100, whereby it is possible to visually grasp the relative positional relationships between the paper sheet processing apparatus 100 and operators A and B, and movement histories of the operators, and use the above display contents for analysis or the like for improvement in the operation and management.

Further, on the display section 103, operation records of the operators A and B, and operating logs of the paper sheet processing apparatus 100 are displayed together with the times of day. In this example, that the power was turned on at 10:00, that the ID was input by the operator A at 10:15, and that the ID was input by the operator B at 10:25 are displayed. Furthermore, that a paper sheet bundle 0000001 was ejected at 11:20, and that a paper sheet bundle 0000002 was ejected at 11:40 are displayed.

In the example shown in FIG. 9, it can be seen that when the paper sheet bundle 0000001 was ejected from the ejecting section 104 at 11:20, whereas the operator A should have received the paper sheet bundle 0000001, the operator A was at the back of the paper sheet processing apparatus 100 at that time of day (11:20) concerned. Thereby, it is possible for the supervisor to determine as an analysis result that the operator A was not at the position at which the operator should have been, and hence the work was delayed. Further, from the display shown in FIG. 9, it can be seen that while the operators A and B were carrying out operations, another operator was not on standby, and was carrying out another operation. Thereby, the supervisor can see that the rotation of the operators was not carried out quickly and immediately. Accordingly, it is possible to determine whether or not cooperation between the operators works appropriately.

Further, the supervisor can identify, for example, an area in which congestion occurs as movement pathways of a plurality of operators. For example, in FIG. 9, it can be visually recognized that overlap between the movement loci of the operators A and B frequently occurs in front of (at the lower left part of the display 103) the ejecting section 104. Thereby, for example, it is possible to utilize the recognition result as a material for an idea for improvement in the layout inside the working chamber, for example, moving the peripheral equipment and materials to other places so that more space can be added to the area concerned, and the like. It should be noted that the above-mentioned analysis carried out by the supervisor may also be carried out by the analysis section 305.

FIG. 10 is a view showing another example of the case where the processing of the paper sheet processing apparatus 100, positions of the operators, and operation record or operating log are correlated with each other to be displayed as the output of the paper sheet processing apparatus 100 to be displayed on the display section 103. In the example shown in FIG. 10, a layout formed by display-enlarging an area in the vicinity of the loading port 107 is displayed on the display section 103. On the display section 103, movement loci of predetermined parts of the bodies of the operators A and B are displayed in a form of lines. In this example, a solid line in the vicinity of the object L107 of the loading port represents the movement locus of the position of the hand of the operator A, and broken line represents the movement locus of the position of the hand of the operator B. In this way, the movement loci of the hands of the operators A and B in the vicinity of the loading port are displayed, whereby it is possible to visually grasp the tendency in the direction of bills or the like at the time of loading, and in the loading direction (angle) for each operator.

Furthermore, contents of the log information 403 are displayed on the display section 103 together with time-of-day information. In the example shown in FIG. 10, the operating log of the paper sheet processing apparatus 100 is displayed. More specifically, that a skew occurred in the paper sheets loaded by the operator A at 11:25 and 11:35 is displayed, and the skew-occurrence positions are indicated by arrows. Likewise, regarding the paper sheets loaded by the operator B, that a stain was detected at 13:21, and that a skew occurred at 13:27 are displayed. Loading directions and speeds at that time may be displayed together with display of the log information 403. Thereby, it is possible to confirm the movement and speed of the hand of the operator or loading direction at the time of error occurrence in a unified manner, and use the display contents as a material to be studied for improvement in the loading operation. That is, it is possible to grasp the relationship between the speed and moving direction of a predetermined part of the body of the operator and operation record and operating log of the paper sheet processing apparatus 100, and use the relationship for analysis or the like for improvement in the operation and management. Further, it is allowed to subject the output result 405 to statistical processing by means of the analysis section 305 to thereby analyze what kind of movement of the hand at the time of paper-sheet loading largely influences the processing result and error occurrence rate. Further, the display shown in FIG. 9 and display shown in FIG. 10 may be switched to be displayed.

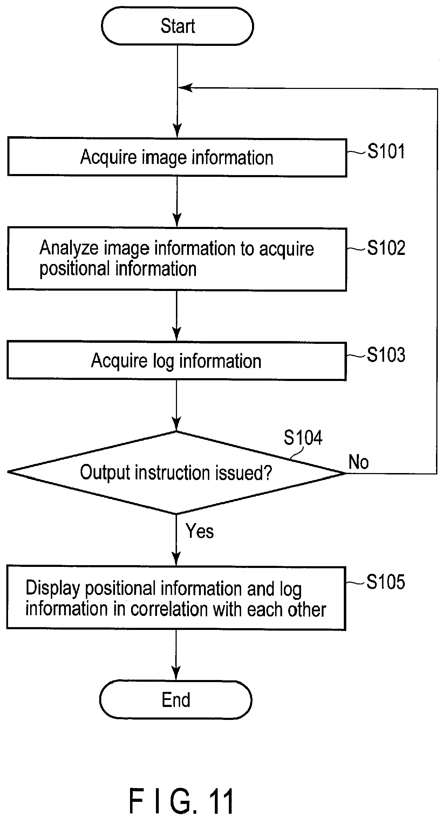

Next, an example of processing in the paper sheet processing apparatus 100 according to the embodiment will be described below. FIG. 11 is a flowchart showing an example of processing in the paper sheet processing apparatus 100. In the example shown in FIG. 11, the image information acquisition section 301 first acquires image information 401 from the imaging devices 200a and 200b (S101), and causes the storage section 400 to store therein the acquired image information 401.

Next, the positional information acquisition section 302 analyzes the image information 401 acquired from the storage section to thereby acquire positional information 402 concerning the predetermined part of the body of the operator (S102). The positional information acquisition section 302 causes the storage section 400 to store therein the acquired positional information 402.

Next, the log information acquisition section 303 acquires the operation record of the paper sheet processing apparatus 100 and log information 403 which is the operating log of the paper sheet processing apparatus 100 (S103), and causes the storage section 400 to store therein the acquired record and information. It should be noted that step S103 may be carried out prior to the processing of steps 101 and 102.

Next, the output control section 304 determines whether or not an output instruction has been issued from the operating section 102 or external device (S104). When no output instruction has been issued, the flow returns to the processing of step S101. When an output instruction has been issued, the output control section 304 causes the display section 103 to display the positional information 402 and log information 403 in correlation with each other (S105), and then terminates the processing.

According to the first embodiment configured as described above, the paper sheet processing system 1 is provided with the imaging device 200 (imaging section) configured to image predetermined parts of the paper sheet processing apparatus 100, positional information acquisition 302 configured to acquire positional information 402 concerning the operator carrying out predetermined operations with respect to the paper sheet processing apparatus 100 on the basis of image information 401 acquired from the imaging device 200, log information acquisition section 303 configured to acquire an operation record of the operator for the paper sheet processing apparatus 100 or operating log of the paper sheet processing apparatus 100 as log information 403, and output control section 304 configured to output the positional information 402 and log information 403 in correlation with each other. Thereby, it is possible to manage various recording information items concerning the paper sheet processing apparatus 100 in a unified manner, and use the information items for analysis or the like for improvement in the operation and management. Further, the output control section 304 outputs the processing result of the paper sheet processing apparatus 100 in a predetermined period to thereby output the positional information 402 and processing result 404 in correlation with each other. Thereby, it is possible to grasp the operational status and error occurrence status and like of the paper sheet processing apparatus 100 and positional information concerning the operator in correlation with each other, and use the status information and the positional information for analysis or the like for improvement in the operation and management. Further, the output control section 304 displays the positional information 402 of the operator correlated with the time of day together with an image indicating the position of the paper sheet processing apparatus 100. Thereby, it is possible to visually grasp the relative positional relationship between the paper sheet processing apparatus 100 and operator, and use the relationship for analysis or the like for improvement in the operation and management.

From the above description, according to the first embodiment, it is possible to provide a paper sheet processing system and paper sheet processing apparatus which make it possible to manage various recording information items concerning the paper sheet processing apparatus in a unified manner, and use the various information items for analysis or the like for improvement in the operation and management.

Next, a paper sheet processing system and a method of processing paper sheets according to another embodiment will be described below. In another embodiment to be described hereinafter, parts identical to the above-mentioned first embodiment are denoted by reference symbols identical to the first embodiment, and their detailed descriptions are omitted or simplified, and parts different from the first embodiment will mainly be described in detail.

### (Second Embodiment)

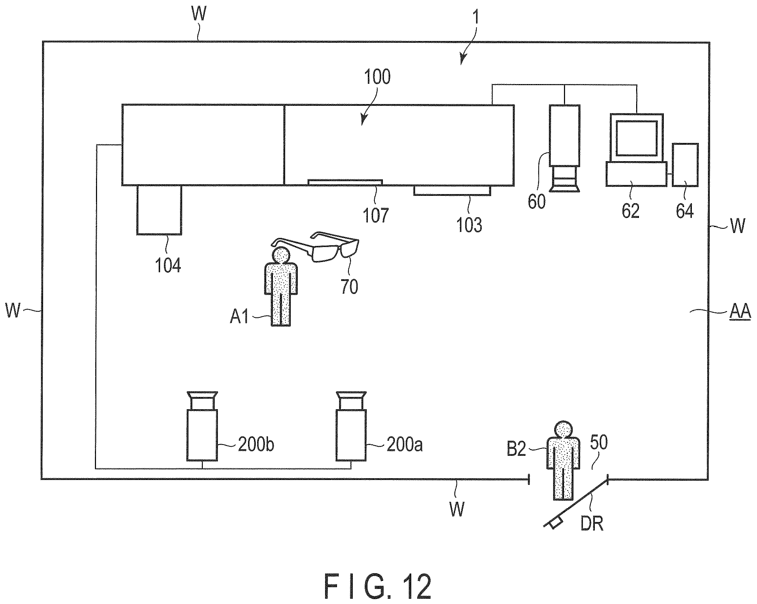

Next, a paper sheet processing system and a method of processing paper sheets according to a second embodiment will be described. FIG. 12 is a view schematically showing the whole paper sheet processing system according to the second embodiment. As shown in FIG. 12, a paper sheet processing system 1 is installed in a working space (processing room) AA in which an entrance and exit of persons are limited, and is a system configured to automatically process paper sheets such as bills. The working space AA is surrounded by, for example, a fence W, and is separated from the outside. At a part of the fence W, a doorway 50 for entrance and exit of the entering persons such as the operators or maintenance people, and door DR configured to open/close the doorway 50 are provided. Further, in the vicinity of the door DR, an unlocking device (not shown) is provided. Upon reading of the ID card of the entering person or when a predetermined ID number is input by the entering person, and if the ID is coincident with the registered ID, the unlocking device unlocks the lock of the door DR to bring the doorway 50 into an enterable state. That is, only persons registered in advance can enter the working space AA.

The paper sheet processing system 1 is provided with the paper sheet processing apparatus 100 installed in the working space AA. The paper sheet processing apparatus 100 is a processing device configured to process, for example, bills as paper sheets and, in one example, is a paper sheet processing apparatus having a configuration identical to the paper sheet processing apparatus 100 in the first embodiment described previously. That is, the paper sheet processing apparatus 100 is provided with a loading port (supply section) 107 through which paper sheets are input and loaded, inspection device configured to inspect paper sheets sent thereto from the loading port, accumulation section configured to accumulate the paper sheets inspected by the inspection device, ejecting section 104 through which the accumulated and bound paper sheet bundles are ejected, and monitor (first display section) 103 configured to display operating information concerning the paper sheet processing apparatus.

The paper sheet processing system 1 is provided with imaging devices (for example, cameras) 200a and 200b configured to image predetermined parts of the paper sheet processing apparatus 100, monitoring camera 60 configured to image positions in the vicinity of the doorway 50 to thereby monitor entering persons and exiting persons, information processing device configured to authenticate facial images of entering persons and exiting persons shot by the monitoring camera 60, for example, an information terminal (personal computer) 62, and wearable device 70 worn by an entering person having a browsing right of a predetermined level, for example, an operator A1 of the right level 1. The information terminal 62 is connected to a storage device 64. In the storage device 64, a database in which facial images of registered persons and browsing right levels are recorded in correlation with each other is stored.

The imaging devices 200a and 200b, monitoring camera 60, information terminal 62, and wearable device 70 are each connected to the paper sheet processing apparatus 100 by wire or by wireless in such a manner as to be able to carry out information communication with each other. Besides, the paper sheet processing apparatus 100 may be connected to an external host computer or the like. The monitoring camera 60 may be made a monitoring camera provided with a face authentication function. As the wearable device 70, for example, an eyeglass-type wearable device capable of displaying arbitrary information on a transmission-type lens part (second display section) or transmission-type head-mounted display can be used.

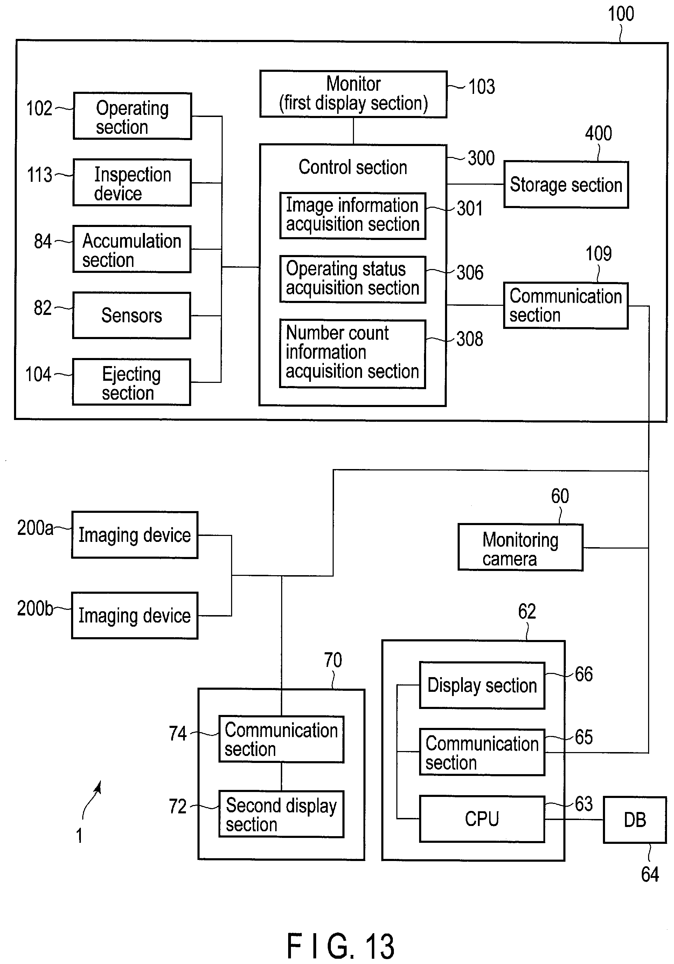

FIG. 13 is a block diagram schematically showing the whole configuration of the paper sheet processing system.

As shown in FIG. 13, the paper sheet processing apparatus 100 includes, for example, an operating section 102, monitor (first display section) 103, inspection device 113, cover sensor, optical sensor configured to detect passage of paper sheets, and the like, and is provided with various sensors 82 configured to detect the operating status of the paper sheet processing apparatus, communication section 109, accumulation section 84 configured to accumulate the paper sheets inspected by the inspection device 113, storage section 400 storing therein various information items concerning the paper sheet processing apparatus, and control section 300 configured to control the operation of the paper sheet processing apparatus 100.

All of or part of functions possessed by the control section 300 are realized by, for example, a processor provided in the control section 300 such as a CPU or the like by executing various programs stored in the storage section 400. The control section 300 includes an image information acquisition section 301 configured to acquire image information from the imaging devices 200a and 200b, and monitoring camera 60 through the communication section 109, operating status acquisition section 306 configured to detect the operating status of the processing device in response to a detection signal of the sensors 82, number count information acquisition section 308 configured to acquire number count information concerning paper sheets in response to a detection signal of the sensors 82 and, besides, functional sections identical to those in the first embodiment described previously. In this embodiment, the operating status information includes, as first information, machine-condition information, e.g., a device-operating state, under suspension, cleaning, jam occurrence, jam occurrence position, and the like. Further, the number count information includes, as second information, number count information, e.g., processed sheet number, accumulated sheet number, rejected sheet number, remaining sheet number (remainder), and the like, and executed work information (e.g., work content to be executed subsequently). It is possible for the control section 300 to display the aforementioned first information and second information on the monitor 103, and send the first information and second information to the wearable device 70 through the communication section 109 to thereby display the information items on the display section (lens part). It should be noted that as shown in FIG. 13, the wearable device 70 is, for example, an eyeglass-type device, and includes a transmission-type lens part constituting the second display section 72, and communication section 74 configured to transmit/receive information to/from the paper sheet processing apparatus 100.

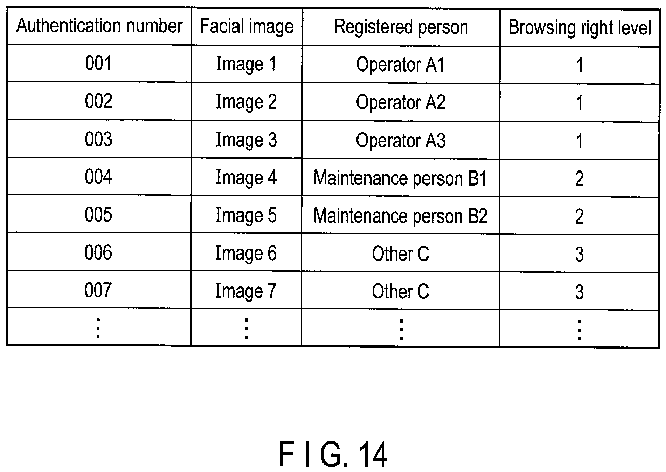

The information terminal 62 includes a control section (CPU) 62, communication section 65, and display section 66, and the control section 62 is connected to a storage device 64 storing therein a database DB. The communication section 65 is connected to the monitoring camera 60 and communication section 109 of the paper sheet processing apparatus by wire or by wireless in such a manner as to be able to carry out information communication with each other. In the database DB, a face collation field or face collation table is stored. FIG. 14 shows an example of a face collation field. As shown in FIG. 14, the face collation field FF shows facial images of registered persons registered in advance as entry-permitted persons, types of registered persons, browsing right levels, and authentication numbers in correlation with each other. For example, authentication numbers 001 to 007, facial images 1 to 7, statuses of registered persons (for example, operators A1, A2, and A3, maintenance persons B1 and B2, others C1 and C2), and browsing right levels 1 to 3 are recorded in correlation with each other. It should be noted that in this embodiment, the browsing right level implies a level indicating an extent to which browsing of information displayed on the monitor 103 of the paper sheet processing apparatus 100 is permitted, the higher the level, the more the information permitted to browse is and, the lower the level, the more the information permitted to browse is limited. In this embodiment, as to the browsing right level, the level 1 is the highest, and levels 2 and 3 becomes lower in this order. For example, the operators A1, A2, and A3 are at the highest right level 1, maintenance persons B1 and B2 are at the right level 2 having the intermediate right, and registered persons of others C1 and C2 are set to the lowest right level 3.

When a facial image of an entering person is sent from the monitoring camera 60 through the communication section 65, the CPU 63 of the information terminal 62 collates the facial image with facial images registered in the face collation field FF, and selects a facial image coincident with that of the entering person. Further, the CPU 63 reads the authentication number, registered person, and browsing right level corresponding to the selected facial image from the face collation field FF simultaneously or in sequence, and transmits the read information items to the control section 300 of the paper sheet processing apparatus 100 through the communication section 65 and communication section 109. Furthermore, the CPU 63 may display the read authentication number, registered person, and browsing right level on the display section 66 of the information terminal 62.

As shown in FIG. 13, the wearable device 70 includes a communication section 74 configured to receive information and instruction from the communication section 109 of the paper sheet processing apparatus 100, and second display section 72 configured to display thereon received information. In this embodiment, the wearable device 70 uses an eyeglass-type device, includes a transmission-type lens part, and the lens constitutes the second display section 72 capable of displaying information. Even in a state where information is displayed, it is possible to visually confirm the surroundings through the lens. In this embodiment, it is a rule that the wearable device 70 should be worn and used by an operator of the right level 1.

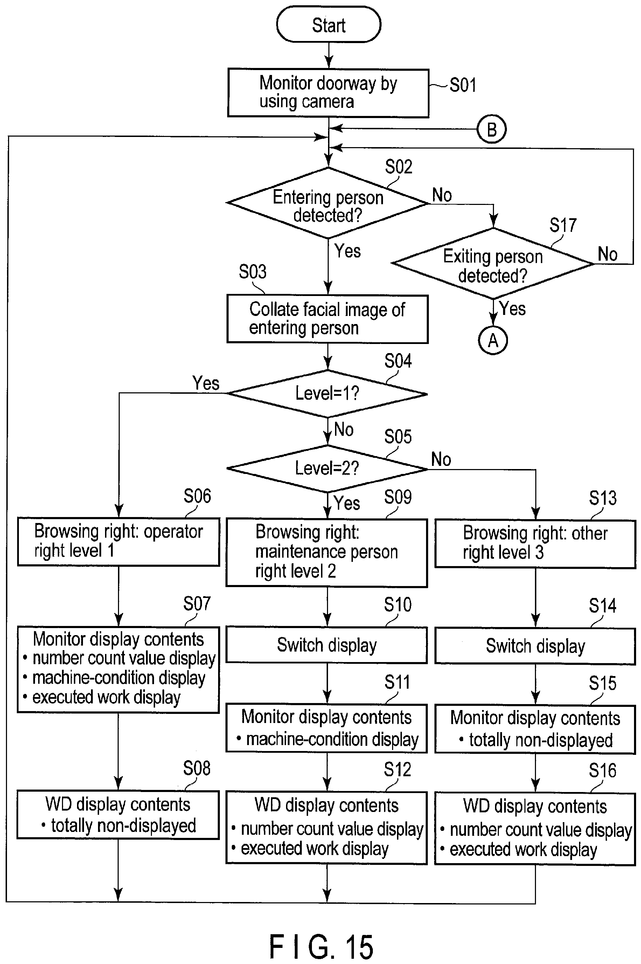

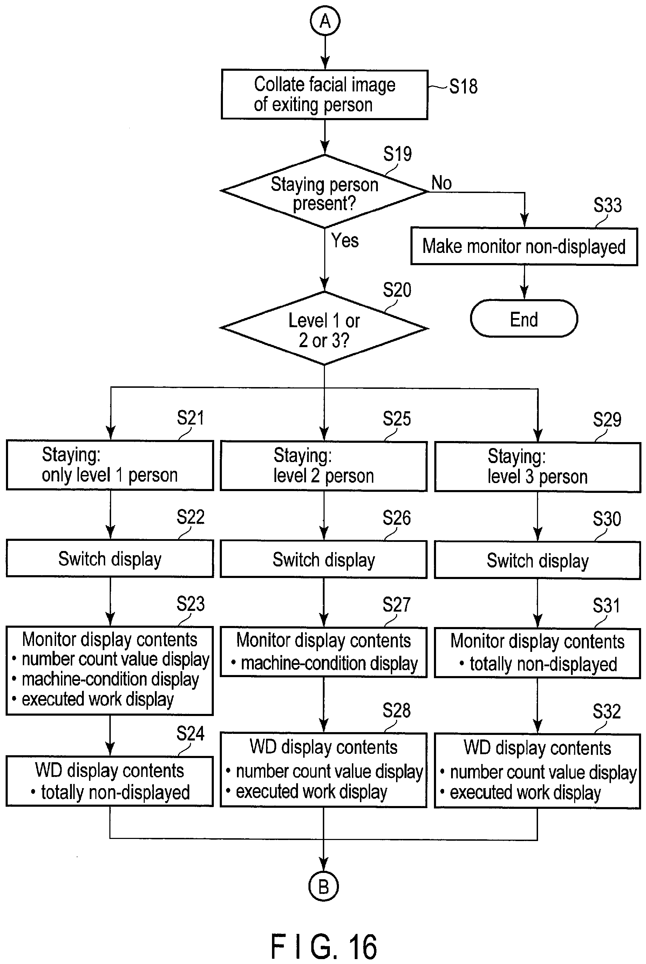

Next, an example of information display processing in the paper sheet processing system 1 according to the embodiment will be described below. Each of FIG. 15 and FIG. 16 is a flowchart showing an example of processing in the paper sheet processing apparatus 100. As shown in FIG. 15, the paper sheet processing system monitors the doorway 50 at all times by using the monitoring camera 60 (S01). When an entering person is detected from the shot image of the monitoring camera 60 (S02), the information terminal 62 collates the facial image of the entering person with the face collation field FF of the database DB (S03), and reads the corresponding registered person and browsing right level. The information terminal 62 displays the read registered person and browsing right level on the display section 66, and transmits the read registered person and browsing right level to the control section 300 of the paper sheet processing apparatus 100 through the communication sections 65 and 109. Furthermore, the information terminal 62 stores the read registered person and browsing right level in the database DB as an entering person record.

The control section 300 detects whether the right level sent thereto is the level 1 (S04) or level 2 (S05). Upon detection of the right level 1 and operator A1 in step S04, the control section 300 displays the first information and second information, for example, the machine condition, number count value (processed sheet number, rejected sheet number, remaining sheet number, etc.), and executed work on the monitor (first display section) 103 of the paper sheet processing apparatus 100 (S07). At this time, the control section 300 brings the second display section 72 of the wearable device 70 worn by the operator A1 into a totally non-displayed state (S08). It should be noted that the operator A1 may enter the working space AA in a state where the operator A1 is wearing the wearable device or may take the wearable device 70 provided in the working space AA to put it on after entering the space AA. Further, it is desirable that the wearable device 70 be a wearable device registered in advance in correlation with the operator A1.

In the state where the wearable device is in the non-displayed state, there is no display on the transmission-type lens, and it is possible for the operator A1 to visually confirm the surroundings through the lens, and continue the normal work (for example, confirming information displayed on the monitor 103, visually confirming the conveyance pathways periodically, carrying out loading of paper sheets while carefully watching the paper sheets to avoid the paper sheets from falling off, and the like) without any trouble.

Upon determination that the entering person has the right level 2, and is a maintenance person B1 in step S05 (S09), the control section 300 switches the display of each of the monitor 103 and second display section 72 (S10). The display contents of the monitor 103 are made only the first information (machine-condition display), and second information (number count value display, and executed work display) is made non-displayed (S11). At the same time, the control section 300 displays the second information (number count value display, and executed work display) on the second display section 72 of the wearable device 70 worn by the operator A1. Thereby, the display information of the monitor 103 which can visually be confirmed by the maintenance person B1 of the lower right level (level 2) is limited to only the first display information (machine-condition display), and the whole information (first information and second information) is displayed only for the operator A1 of the higher right level (level 1).

In step S05, when the entering person is not of the right level 2, the control section 300 determines that the right level of the entering person is the right level 3 (others C) (S13). Then, the control section 300 switches the display of each of the monitor 103 and second display section 72 (S14), makes the monitor 103 totally non-displayed (S15) and, at the same time, displays the second information (number count value display, and executed work display) on the second display section 72 of the wearable device 70 worn by the operator A1.

As described above, in this paper sheet processing system, the display contents of each of the monitor 103 and the wearable device 70 worn by the operator A1 are switched according to the browsing right level of the entering person. For example, in a case where in the state where the operator A1 is present in the room, a jam has occurred in the paper sheet processing apparatus 100, and the maintenance person B1 has entered the working space AA, only the first information (machine-condition information) is displayed on the monitor 103. At the same time, the second information (number count value information, and executed work information) is displayed on the wearable device 70 worn by the operator A1. In such a display state, the operator A1 can confirm the processed sheet number and executed work, and the processed sheet number cannot be viewed by the maintenance person B1. Accordingly, the operator A1 can confirm the processed sheet number, and maintenance person B1 can carry out jam disposal simultaneously. Further, when a plurality of persons different from each other in the browsing right level have simultaneously entered the room, the right level of each entering person is read from the face collation field FF of the database DB, and the display contents of the monitor 103 are changed according to the lowest right level (level 3) among those of the entering persons. Thereby, it is made impossible for a person of the lower browsing right level to acquire highly confidential information from the monitor 103.

On the other hand, as shown in FIG. 15 and FIG. 16, when an exiting person is detected from the shot image of the monitoring camera 60 (S17), the information terminal 62 collates the facial image of the exiting person with the face collation field FF of the database DB (S19), and reads the corresponding registered person and browsing right level. The information terminal 62 records the read registered person and browsing right level in the database DB as the exiting person, and transmits the read registered person and browsing right level to the control section 300 of the paper sheet processing apparatus 100 through the communication sections 65 and 109. After receiving the information concerning the exiting person, the control section 300 confirms whether or not there is any staying person remaining in the working space AA (S19) and, when there is a staying person, detects which one of the levels 1, 2, and 3 is the right level of the staying person on the basis of the database DB (S20).

In step S20, when the staying person is only the operator A1 of the right level 1 (S21), the control section 300 switches the display of each of the monitor 103 and wearable device 70 (S22), displays the first information (machine-condition display) and second information (number count value display, and executed work display) on the monitor 103 (S23), and makes all the information items non-displayed with respect to the second display section 72 of the wearable device 70 (S24).

In step S20, upon determination that the staying persons include a maintenance person of the right level 2 (S25), the control section 300 switches the display of each of the monitor 103 and second display section 72 (S26), makes the display contents of the monitor 103 only the first information (machine-condition display) (S27), and displays the second information (number count value display, and executed work display) on the second display section 72 (S28).

In step S20, upon determination that the staying persons include the right level 3 (others C) (S29), the control section 300 switches the display of each of the monitor 103 and second display section 72 (S30), makes the monitor 103 totally non-displayed (S31), and displays the second information (number count value display, and executed work display) on the second display section 72 (S32).

In step S19, when there is no staying person, the control section 300 brings the monitor 103 into the non-displayed state (S33), and terminates the processing.

As described above, in this paper sheet processing system, when the maintenance person B and others C have exited the room, and only the operator A1 is staying in the room, the display contents (number count value display, and executed work display) of the wearable device 70 is transferred to the monitor 103, thereby restoring the monitor 103 to the original state. Thereby, the display on the transmission-type lens (second display section) of the wearable device is annulled, and the operator A1 can continue the operation without any trouble to the normal work in the state where the operator A1 is wearing the wearable device 70.

According to the paper sheet processing system of the second embodiment configured as described above, for example, when a maintenance person has entered the working space in the jam disposal of the paper sheet processing apparatus, the display information items are separated into those for the wearable device and those for the monitor to be displayed, whereby the disclosed information which can be browsed by the maintenance person is controlled. Accordingly, it is possible for entering persons having different browsing right levels to concurrently carry out work in the same working space AA. As a result, the standby time of the operator and maintenance person is eliminated, thus it becomes possible to complete the whole work earlier, and the operational efficiency can be improved.

When a person of the lower browsing right level has entered the room, the display contents of the monitor are automatically limited, and hence the level of security is enhanced without any entering person having no browsing right viewing the highly confidential processing information. For example, even when a maintenance person has suddenly entered the room, non-display switching of the monitor screen can automatically be carried out in a moment as long as the monitoring camera is in operation, and hence the level of security is enhanced.

From the above description, according to the second embodiment, it is possible to obtain a paper sheet processing system which makes it possible to improve the operational efficiency and level of security.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A paper sheet processing system **characterized by** comprising:
a paper sheet processing apparatus (100); and
an imaging section (200a, 200b) configured to image predetermined positions of the paper sheet processing apparatus, in that
the paper sheet processing apparatus comprises
a positional information (302) acquisition section configured to acquire positional information concerning an operator carrying out a predetermined operation with respect to the paper sheet processing apparatus on the basis of image information acquired from the imaging section,
a log information acquisition section (303) configured to acquire an operation record of the operator concerning the paper sheet processing apparatus or an operating log of the paper sheet processing apparatus as log information,
an output control section (304) configured to output the positional information and the log information in correlation with each other, and
a display section (103) configured to display information output from the output control section, and
the output control section (304) outputs a processing result of the paper sheet processing apparatus in a predetermined period, outputs the positional information and the processing result in correlation with each other, and displays the positional information correlated with the time of day of the operator on the display section together with an image indicating the position of the paper sheet processing apparatus.

2. The paper sheet processing system of Claim 1, **characterized in that** the output control section displays a locus of movement of the operator on the display section together with an image indicating the position of the paper sheet processing apparatus.

3. The paper sheet processing system of Claim 1, **characterized in that** the positional information acquisition section (302) acquires a moving speed of a predetermined part of the body of the operator, and the output control section (304) outputs the moving speed and the log information in correlation with each other.

4. The paper sheet processing system of Claim 3, **characterized in that** the positional information acquisition section (302) acquires a moving speed of a hand of the operator, and
the output control section (304) outputs a moving speed of the hand within a predetermined range from a loading port of the paper sheet processing apparatus and the log information in correlation with each other.

5. The paper sheet processing system of Claim 1, **characterized by** further comprising an analysis section (305) configured to subject an output result of the output control section (304) to predetermined statistical processing.

6. A paper sheet processing apparatus **characterized by** comprising:
an image information acquisition section (301) configured to acquire image information obtained by imaging predetermined parts of the paper sheet processing apparatus;
a positional information acquisition section (302) configured to acquire positional information concerning an operator carrying out a predetermined operation with respect to the paper sheet processing apparatus on the basis of the image information;
a log information acquisition section (303) configured to acquire an operation record of the operator concerning the paper sheet processing apparatus or an operating log of the paper sheet processing apparatus as log information;
an output control section (304) configured to output the positional information and the log information in correlation with each other; and
a display section (103) configured to display information output from the output control section, wherein
the output control section (304) outputs a processing result of the paper sheet processing apparatus in a predetermined period, outputs the positional information and the processing result in correlation with each other, and displays the positional information correlated with the time of day of the operator on the display section together with an image indicating the position of the paper sheet processing apparatus.

7. A method of processing paper sheets **characterized by** comprising:
acquiring image information obtained by imaging predetermined parts of a paper sheet processing apparatus 100);
acquiring positional information concerning an operator carrying out a predetermined operation with respect to the paper sheet processing apparatus on the basis of the image information;
acquiring an operation record of the operator concerning the paper sheet processing apparatus or an operating log of the paper sheet processing apparatus as log information;
outputting the positional information and the log information in correlation with each other;
outputting a processing result of the paper sheet processing apparatus in a predetermined period, outputting the positional information and the processing result in correlation with each other; and
displaying the positional information correlated with the time of day of the operator together with an image indicating the position of the paper sheet processing apparatus.

8. A method of processing paper sheets by a paper sheet processing apparatus (100) comprising a first display section (103) and installed in an enclosed working space (AA), the method **characterized by** comprising:
monitoring a doorway of the working space and imaging an entering person entering the working space;
authenticating the entering person on the basis of a facial image of the entering person acquired by the monitoring and a data base in which facial information items of entering persons and right levels are recorded in correlation with each other, to thereby detecting a corresponding right level;
wearing a wearable device (70) with a second display section (72) on an operator possessing a first right level;
when an entering person possessing the first right level is authenticated, displaying first information and second information on the first display section (103), and making the second display section (72) of the wearable device non-displayed; and
when an entering person possessing a second right level is authenticated, clearing the second information from the first display section (103), and displaying the second information on the second display section (72) of the wearable device.

9. The method of Claim 8, **characterized in that** the first information includes machine-condition information of the paper sheet processing apparatus, and the second information includes number count value information including the number of processed paper sheets.

10. The method of Claim 8, **characterized in that** when an exiting person exiting from the working space (AA) is imaged, authenticating the exiting person on the basis of a facial image of the entering person and the database, and detecting a corresponding right level, and
when an exiting person of the second right level and a staying person of the first right level are recognized, displaying the first information and the second information on the first display section (103), and switching the second display section (72) of the wearable device to a non-displayed state.
